# EUROPÄISCHE PATENTANMELDUNG

(11) **EP 0 914 920 A2**
(43) Veröffentlichungstag der Anmeldung: **12.05.1999**
(21) Anmeldenummer: 98119441.8
(22) Anmeldetag: 15.10.1998
(51) Int. Cl.: B29C 45/14, B29C 45/56

(54) **Verfahren und Vorrichtung zum Herstellen von Verbundkörpern aus einer Kunststoffmasse**

(30) Priorität: 07.11.1997 DE 19749243
(71) Anmelder: HERBST, Richard, D-85386 Eching (DE)
(72) Erfinder: HERBST, Richard, D-85386 Eching (DE)
(74) Vertreter: Witte, Alexander, Dr.-Ing.

(57) **Zusammenfassung**

Ein Verfahren und eine Vorrichtung dienen zum Herstellen von Verbundkörpern aus einer Kunststoffmasse, in die ein Bauteil (25) zumindest teilweise eingebettet ist. Eine flüssige Kunststoffschmelze (30) wird in einen Formhohlraum eines Spritzgießwerkzeugs (10) eingespritzt, wobei die Kunststoffschmelze (30) im Formhohlraum das Bauteil (25) wenigstens teilweise umschließt. Das Bauteil (25) wird dem Formhohlraum durch eine mit einem Übergang (23) in eine Oberfläche (34) des Formhohlraums (13) mündende Aussparung (20) zugeführt. Der Übergang (23) wird überdeckt, wenn das Bauteil (25) beim Zuführen den Übergang (23) passiert.

## Beschreibung

Die Erfindung betrifft ein Verfahren zum Herstellen von Verbundkörpern aus einer Kunststoffmasse, in die ein Bauteil zumindest teilweise eingebettet ist, bei welchem Verfahren eine flüssige Kunststoffschmelze in einen Formhohlraum eines Spritzgießwerkzeugs eingespritzt wird und die Kunststoffschmelze im Formhohlraum ein Bauteil wenigstens teilweise umschließt, wobei das Bauteil dem Formhohlraum durch eine mit einem Übergang in eine Oberfläche des Formhohlraums mündende Aussparung zugeführt wird.

Die Erfindung betrifft ferner eine Vorrichtung zum Herstellen von Verbundkörpern aus einer Kunststoffmasse, in die ein Bauteil zumindest teilweise eingebettet ist, mit einem Spritzgießwerkzeug und einem darin vorgesehenen Formhohlraum, in dessen Oberfläche seitlich eine Aussparung mit einem Übergang mündet, wobei eine flüssige Kunststoffschmelze in den Formhohlraum eingespritzt wird und die Kunststoffschmelze im Formhohlraum ein Bauteil wenigstens teilweise umschließt, und wobei ferner das Bauteil dem Formhohlraum durch die Aussparung zugeführt wird.

Ein Verfahren und eine Vorrichtung der vorstehend genannten Art sind aus der DE 41 42 410 A1 bekannt.

Beim Spritzgießen von Kunststoffteilen werden häufig Bauteile mit eingespritzt, bspw. metallische Verstärkungselemente, Haken, Scharniere und dgl. Es ist ferner bekannt, beim Spritzgießen von Smart Cards ein sogenanntes Modul in den Formhohlraum des Werkzeugs einzulegen, so daß das Modul beim Spritzgießen der Smart Card mit umspritzt wird. Unter einem Modul versteht man dabei einen Halbleiterchip, der mit einer Kontaktfläche, die dazu dient, eine Signalverbindung zwischen dem Halbleiterchip und einem Lesegerät herzustellen, elektrisch leitend verbunden und anschließend mit einer Kunststoffmasse vergossen ist.

Aus der DE 41 15 208 C2 ist ein Werkzeug zum Herstellen von Smart Cards bekannt. Smart Cards sind sehr flache Gegenstände von ca. 50 mm Breite und 80 mm Länge, jedoch nur von ca. 0,6-0,8 mm Dicke. Wenn in einem Kunststoff-Spritzgießwerkzeug ein so dimensionierter Formhohlraum vorgesehen wird, können sich wegen der sehr engen Querschnitte Probleme bei der Ausbreitung der flüssigen Kunststoffschmelze während des Einspritzvorganges ergeben. Dies gilt insbesondere dann, wenn der ohnehin äußerst flache Formhohlraum bereichsweise durch ein Modul ausgefüllt wird, dessen Höhe nur geringfügig kleiner ist als die Höhe des Formhohlraums. Wenn z.B. das Modul 0,6 mm hoch ist und die Höhe des Formhohlraums 0,8 mm beträgt, so verbleibt "hinter" dem Modul nur noch ein Zwischenraum von 0,2 mm Höhe, in dem sich die flüssige Kunststoffschmelze nur schlecht ausbreiten kann.

Bei dem aus der vorstehend genannten DE 41 15 208 C2 bekannten Verfahren bzw. dem zu dessen Durchführung verwendeten Werkzeug wird daher ein anderer Weg beschritten. Das bekannte Werkzeug ist mit zwei Stempeln versehen, die gegenläufig bewegbar sind. In der Ausgangsposition befinden sich beide Stempel etwa in Flucht mit der Oberfläche des Formhohlraums, in der sich die Bohrung befindet, in der die beiden Stempel bzw. Kolben laufen. Die flüssige Kunststoffschmelze kann in dieser Ausgangsstellung über den praktisch unverminderten Querschnitt des Formhohlraums eingespritzt werden. Während die Kunststoffschmelze noch verformbar ist, fährt nun einer der Stempel in die Kunststoffschmelze ein, während der andere Stempel zurückgezogen wird. Die Wege und Querschnitte der Stempel sind dabei so bemessen, daß sich während der Bewegung der Stempel insgesamt keine Volumenänderung ergibt. Das fertig gespritzt Kunststoffteil hat dann an der Stelle, an der der erste Stempel eingefahren wurde, eine Vertiefung. In diese Vertiefung kann dann in einem separaten Arbeitsgang das Modul nachträglich eingesetzt und bspw. eingeklebt werden, nachdem das Kunststoffteil aus dem Werkzeug entnommen wurde.

Nachteil dieses bekannten Verfahrens ist, daß für das Einsetzen des Moduls ein separater Arbeitsgang nach dem Entformen des Verbundkörpers erforderlich ist.

Aus der eingangs genannten DE 41 42 410 A1 ist eine Vorrichtung zum Herstellen von flachen Kunststoff-Formstücken, bspw. Ausweiskarten, bekannt. Die bekannte Vorrichtung umfaßt zwei Werkzeughälften. Die untere Werkzeughälfte hat einen prismatischen, im Querschnitt trapezförmigen Abschnitt. In die seitlichen Schrägflächen sind flache Formhohlräume in Gestalt der herzustellenden Ausweiskarten eingebracht. Über die erste Werkzeughälfte kann eine zweite Werkzeughälfte gestülpt werden, mit der der prismatische Abschnitt vollständig überdeckt wird. Darüber hinaus sind die zum Einspritzen notwendigen Kanäle vorgesehen.

In der ersten Werkzeughälfte sind im Bereich der flachen Formhohlräume seitlich unter einem rechten Winkel abgehende Bohrungen vorgesehen. In diesen Bohrungen läuft ein Stempel, mit dem ein Modul seitlich in den Formhohlraum zuführbar ist. Dies geschieht dadurch, daß der Stempel aus einer zurückgezogenen Position zunächst gegen ein Trägerband fährt und dort jeweils ein Modul aus dem Trägerband ausstanzt. Während dies geschieht, wird der Formhohlraum mit der flüssigen Kunststoffschmelze ausgespritzt. Durch weiteres Vorfahren des Stempels wird das ausgestanzte Modul in die noch nicht erstarrte Kunststoffmasse eingepreßt.

Nachteil dieser bekannten Vorrichtung ist, daß zwischen dem Stempel und der Bohrung ein durch das notwendige Spiel bedingter geringfügiger Spalt vorhanden ist. Die unter hohem Druck eingespritzte Kunststoffschmelze dringt nun auch in diesen Spalt ein, zumal der Druck im Formhohlraum durch das Einpressen des Moduls in die erstarrte Kunststoffmasse noch weiter erhöht wird. Nach dem Erstarren der Kunststoffmasse und dem Zurückziehen des Stempels ist daher an der entsprechenden Oberfläche der Ausweiskarte um das Modul herum eine kleine Wulst zu beobachten. Diese Wulst wird durch die Kunststoffmasse gebildet, die in den Spalt zwischen Stempel und Bohrung eingedrungen ist. Sie stellt einen optisch wahrnehmbaren und daher qualitativen Mangel der Ausweiskarte dar.

Bei der bekannten Vorrichtung ist ferner von Nachteil, daß infolge des hohen Drucks, der im Formhohlraum beim Einspritzen der Kunststoffschmelze herrscht, der Stempel mit dem stirnseitig aufliegenden Modul sogar etwas in die Bohrung zurückgedrückt werden kann. Dies führt bei der fertigen Ausweiskarte dazu, daß das Modul geringfügig aus der entsprechenden Oberfläche der Ausweiskarte vorstehen kann.

Der Erfindung liegt daher die Aufgabe zugrunde, ein Verfahren und eine Vorrichtung der eingangs genannten Art dahingehend weiterzubilden, daß die erwähnten Nachteile vermieden werden. Insbesondere soll eine völlig glatte und damit qualitativ hochwertige Oberfläche des Verbundkörpers, insbesondere einer Smart Card, erreicht werden.

Bei dem Verfahren der eingangs genannten Art wird diese Aufgabe erfindungsgemäß dadurch gelöst, daß der Übergang überdeckt wird, wenn das Bauteil beim Zuführen den Übergang passiert.

Bei der eingangs genannten Vorrichtung wird diese Aufgabe erfindungsgemäß dadurch gelöst, daß das Bauteil den Übergang überdeckt, wenn es beim Zuführen den Übergang überfährt.

Die der Erfindung zugrundeliegende Aufgabe wird auf diese Weise vollkommen gelöst.

Dadurch, daß der Übergang und damit ein etwa vorhandener Spalt am Rande der Aussparung überdeckt wird, kann keine Kunststoffschmelze in diesen Bereich eindringen und optisch wahrnehmbare Oberflächen in Form einer Wulst oder dgl. erzeugen. Darüber hinaus wird durch die seitliche Überdeckung des Überganges mittels des Bauteils erreicht, daß das Bauteil nicht ohne weiteres in die Aussparung zurückgedrückt werden kann. Insgesamt entsteht auf diese Weise eine vollkommen glatte und daher optisch einwandfreie Oberfläche.

Obwohl die Überdeckung des Überganges auf verschiedene Arten und Weisen realisiert werden kann, bspw. durch seitliches Verschieben des Bauteils, ist eine Ausführungsform der Erfindung besonders bevorzugt, bei der das Bauteil während des Zuführens zunächst in einer zur Oberfläche parallelen Richtung komprimiert und dann über den Übergang hinweg wieder entspannt wird.

Diese Maßnahme hat den Vorteil, daß durch eine einfache Formveränderung des Bauteils, also durch verhältnismäßig einfache mechanische Maßnahmen, die gewünschte Überdeckung des Übergangs erreicht werden kann.

Dies gilt insbesondere bei einer bevorzugten Weiterbildung dieser Variante, bei der das Bauteil einen elastischen Träger umfaßt und der Träger komprimiert wird und sich dann selbsttätig entspannt. Der Träger kann dazu aus einem elastischen Material bestehen, am Rand mit einer Dichtlippe versehen oder auf seiner Rückseite mit einem Mäander versehen sein.

Diese Maßnahme hat den Vorteil, daß bereits aufgrund der Elastizität des Trägers die gewünschte Überdeckung selbsttätig bewirkt wird, ohne daß dafür nochmals separate Vorrichtungen erforderlich sind.

In beiden Fällen ist weiterhin bevorzugt, wenn das Bauteil beim Zuführen an einer Innenumfangsfläche der Aussparung entlanggeführt und aufgrund der Formgebung der Innenumfangsfläche komprimiert und entspannt wird. Dies gilt vor allem dann, wenn die Aussparung mindestens teilweise kegelig ausgebildet ist, wobei sie entweder im Bereich des Überganges rechteckig oder zylindrisch ausgebildet sein kann und im Abstand vom Übergang einen pyramidenförmigen bzw. konischen Abschnitt aufweist oder insgesamt kegelig ausgebildet ist.

Diese Maßnahme hat den Vorteil, daß die Formveränderung des Trägers durch einfache axiale Bewegung des Trägers auf eine sich zunächst verjüngende und dann wieder aufweitende Innenumfangsfläche der Aussparung erreicht werden kann. Wenn die Innenumfangsfläche bspw. gesamthaft oder abschnittsweise kegelig ausgebildet ist, so wird der Träger beim axialen Vorschieben auf die kegelige Fläche auftreffen und dann je nach Steigungswinkel der Fläche mehr oder weniger schnell in einer Richtung parallel zur Oberfläche des Formhohlraums komprimiert. Wenn der Träger dann die Mündung der Aussparung in den Formhohlraum, also den Übergang, passiert, so weitet sich der Querschnitt der Aussparung in den Formhohlraum schlagartig auf, mit der Folge, daß sich der Träger wieder entspannen kann bzw. selbsttätig entspannt, wenn er die notwendige Elastizität besitzt. Je nach Anwendungsfall kann dabei das Maß der Entspannung so eingestellt werden, daß der Übergang im notwendigen Ausmaß überdeckt wird.

In diesem Zusammenhang ist bei einem Ausführungsbeispiel der erfindungsgemäßen Vorrichtung ferner bevorzugt, wenn das Bauteil mittels eines in der Aussparung laufenden Kolbens zugeführt wird, wobei der Kolben mindestens abschnittsweise komplementär-kegelig zur Aussparung ausgebildet ist.

Diese Maßnahme hat nicht nur den vorstehend genannten Vorteil, daß ein verformbarer Träger durch Auflaufen auf die kegelige Fläche komprimiert wird. Die Maßnahme hat ferner den Vorteil, daß der Kolben in seiner Endstellung einen wesentlich besseren Verschluß zur Oberfläche des Formhohlraums darstellt, als dies z.B. bei einem zylindrischen Kolben oder Stempel in einer ebenso zylindrischen Aussparung der Fall ist. Insbesondere entsteht beim Aufsetzen eines kegeligen Kolbens auf eine kegelige Aussparung kein Ringspalt infolge eines notwendigen Arbeitsspiels; vielmehr können sich Spalte nur dann einstellen, wenn entweder der Kolben oder die komplementäre Aussparung stellenweise nicht ideal kegelig ausgebildet sind.

Dieses Ausführungsbeispiel der Erfindung hat ferner den Vorteil, daß der am Ende seines Verfahrweges aufsitzende Kolben mit einer geeigneten Schließkraft beaufschlagt werden kann. Diese Schließkraft kann so hoch bemessen werden, daß selbst ein sehr hoher Einspritzdruck im Formhohlraum keine Lageveränderung des Kolbens und damit Zurückdrücken des Bauteils bewirkt. Auch dies kann bei einem zylindrischen Kolben oder Stempel in einer ebenso zylindrischen Bohrung nicht in dieser Weise realisiert werden, da eine Schließkraft im vorstehend erläuterten Sinne nicht aufgebracht werden kann.

Bei Zuführeinrichtungen für das Bauteil in allgemeiner Form kann zum Erzielen desselben Vorteils bevorzugt vorgesehen sein, daß das Bauteil an mindestens einer Position in der Aussparung mechanisch verriegelt wird bzw. dort entsprechende Verriegelungsmittel vorgesehen sind.

Auch diese Maßnahme hat den Vorteil, daß das Bauteil auch bei hohem Einspritzdruck im Formhohlraum nicht wieder zurückgedrückt werden kann.

Es sei darauf hingewiesen, daß die vorstehend genannten Maßnahmen zur Verhinderung des Rückdrückens des Bauteils auch unabhängig von den übrigen geschilderten Merkmalen eingesetzt werden können.

Eine weitere Ausführungsform der Erfindung zeichnet sich dadurch aus, daß das Bauteil in der Aussparung in zwei Stufen zugeführt wird, indem das Bauteil in einer ersten axialen Position angehalten und dann in eine zweite axiale Position gebracht wird, wobei das Bauteil in der ersten axialen Position das Einströmen der Kunststoffschmelze in den Formhohlraum nicht behindert und die Aussparung dicht verschließt, während es in der zweiten Position seine Endstellung erreicht und in die den Formhohlraum ausfüllende Kunststoffschmelze eingedrückt wird.

Diese Maßnahme hat den Vorteil eines sehr einfachen Bewegungsablaufs.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen.
- Fig. 1 - 3: ein Kunststoff-Spritzgießwerkzeug zum Herstellen von Smart Cards nach dem Stand der Technik, in drei verschiedenen Arbeitsstellungen;
- Fig. 4 und 5: ein erstes Ausführungsbeispiel der Erfindung in einer Darstellung ähnlich den Fig. 2 und 3; und
- Fig. 6 bis 8: ein zweites Ausführungsbeispiel der Erfindung in Darstellungen ähnlich den Fig. 1 bis 3.

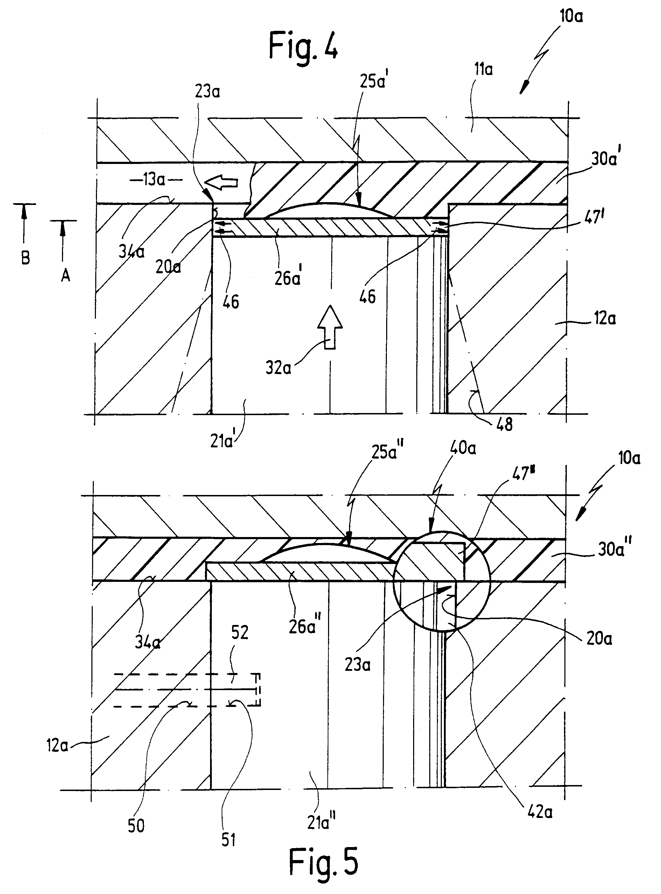

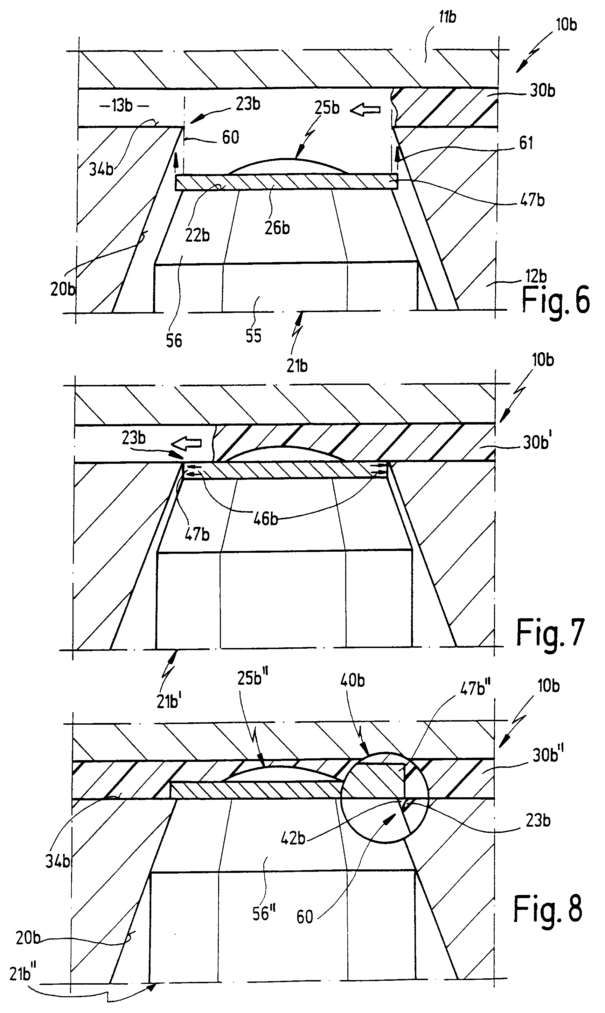

In den Figuren sind generell für gleiche Elemente gleiche Bezugszeichen verwendet worden. Beim Ausführungsbeispiel gemäß den Fig. 4 und 5 wurde jeweils ein "a" hinzugefügt, beim Ausführungsbeispiel gemäß den Fig. 6 bis 8 ein "b". Unterschiedliche Arbeitsstellungen sind durch Hinzufügen von einem oder zwei Apostrophs gekennzeichnet.

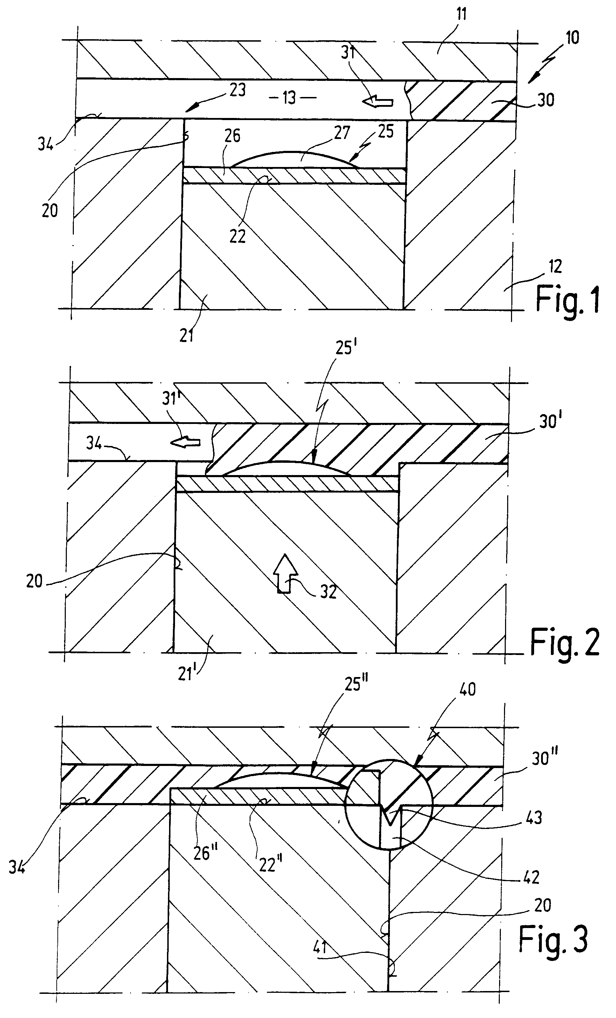

In Fig. 1 bezeichnet 10 insgesamt ein Kunststoff-Spritzgießwerkzeug, wie es zum Herstellen von Smart Cards verwendet werden kann. Das Werkzeug 10 umfaßt eine erste Werkzeughälfte 11 sowie eine zweite Werkzeughälfte 12. Zwischen den Werkzeughälften 11, 12 befindet sich ein Hohlraum 13, der die Gestalt einer Smart Card hat. Der Hohlraum 13 kann entweder in der ersten Werkzeughälfte 11 oder in der zweiten Werkzeughälfte 12 oder jeweils anteilig in beiden Werkzeughälften 11, 12 vorgesehen sein. Die Elemente zum Zuführen der Kunststoffschmelze, zum Beheizen des Werkzeugs 10 usw. sind der Übersichtlichkeit halber nicht dargestellt.

Eine Aussparung 20 führt seitlich in den Hohlraum 13. In der Aussparung 20 läuft ein Stempel oder Kolben 21 mit einer Stirnseite 22, die zum Hohlraum 13 hin weist. Die Aussparung 20 hat vorzugsweise einen rechteckigen oder quadratischen Querschnitt, sie kann aber auch zylindrisch ausgebildet sein oder einen beliebigen geometrischen Querschnitt haben.

Mit 23 ist der Übergang zwischen Aussparung 20 und Hohlraum 13 bezeichnet, anders ausgedrückt, die Aussparung 20 mündet bei 23 in eine Oberfläche 34 des Hohlraums 13, wobei die Oberfläche 34 einer späteren flachen Oberfläche der herzustellenden Smart Card entspricht.

Auf der Stirnseite 22 des Kolbens 21 wird ein sogenanntes Modul 25, allgemeiner ausgedrückt ein Bauteil, bereitgehalten. Das Modul 25 umfaßt einen Träger 26 sowie einen darauf aufgesetzten integrierten Halbleiterchip 27. Es versteht sich an dieser Stelle, daß das Modul 25 auch ein beliebiges Bauteil sein kann, bspw. ein Scharnier, ein Verstärkungselement, ein Beschlag oder dgl. Das Bauteil wurde zuvor in einer nicht dargestellten Bestückungsstellung auf die Stirnseite 22 des Kolbens aufgesetzt, beispielsweise mittels eines Handlingsystems bei weit zurückgezogenem Kolben 21.

Mit 30 ist in Fig. 1 angedeutet, daß eine Kunststoffschmelze seitlich in den Hohlraum 13 eingespritzt werden kann, wie mit einem Pfeil 31 angedeutet. In Fig. 1 hat die Front der Kunststoffschmelze 30 die Aussparung 20 noch nicht erreicht. Der Kolben 21 mit dem Modul 25 befindet sich noch in einer zurückgezogenen Position.

Bei der in Fig. 2 dargestellten etwas späteren Arbeitsstellung ist der Kolben 21' ein Stück nach oben verfahren worden, wie mit einem Pfeil 32 angedeutet. Das Modul 25' hat in dieser Situation fast die Oberfläche 34 erreicht. Wie mit einem Pfeil 31' dargestellt, hat die Front der Kunststoffschmelze 30' die Aussparung 20 bereits weitgehend überstrichen.

In Fig. 3 ist nun die End-Arbeitsstellung dargestellt. Der Kolben 21'' befindet sich in seiner oberen Endstellung, in der seine Stirnseite 22' mit der Oberfläche 34 fluchtet. Das Modul 25'' ist in die erstarrende Kunststoffschmelze 30'' eingedrückt. Der Träger 26'' befindet sich dabei in einer Position, in der seine Unterseite ebenfalls mit der Oberfläche 34 bündig abschließt.

Wie nun jedoch aus dem in Fig. 3 vergrößert dargestellten Ausschnitt 40 erkennbar ist, befindet sich zwischen einer Außenumfangsfläche 41 des Kolbens 21 und der Aussparung 20 ein Spalt 42, der aufgrund des notwendigen Spiels zwischen Kolben 21 und Aussparung 20 unvermeidbar ist. In diesen Spalt 42 dringt Kunststoffschmelze 30'' beim Einspritzen unter hohem Druck ein und bildet dort einen Fortsatz, der sich bei der entformten Smart Card als Ringwulst 43 darstellt. Diese Ringwulst 43 ist optisch wahrnehmbar und auch tastbar, so daß sie einen schwerwiegenden Qualitätsmangel darstellt.

Bei dem in den Fig. 4 und 5 dargestellten Ausführungsbeispiel der Erfindung sind die Verhältnisse insoweit anders, als dort der Träger 26a' elastisch ausgebildet ist, also z.B. aus einem elastischen Material besteht. Der Träger 26a kann aber auch z.B. an seinem Rand nach Art einer Dichtlippe ausgebildet sein. Alternativ kann der Träger 26a auf seiner vom Hohlraum 13 abgewandten Seite über einen wesentlichen Teil seiner Dicke mit einem Mäander versehen sein, um eine Kompressibilität in radialer Richtung zu erzielen. In der in Fig. 4 dargestellten Stellung, die der Stellung beim Stand der Technik gemäß Fig. 2 entspricht, befindet sich das Modul 25a' kurz unterhalb der Oberfläche 34 in einer links von Fig. 4 mit "A" bezeichneten ersten Position. Der Träger 26a' liegt dabei unter seitlichem Druck an der Wand der Aussparung 20 an, wie mit Pfeilen 46 symbolisiert. Dies bedeutet, daß zumindest ein Rand 47' des Trägers 26a' in einer Richtung parallel zur Oberfläche 34 komprimiert ist.

Die Kompression des Randes 47 bzw. des gesamten Trägers 26a kann z.B. dadurch bewirkt werden, daß in Fig. 4 unterhalb der Aussparung 20 eine Schräge 48 oder ein kegeliger Abschnitt vorgesehen wird. Gegen diese Schräge 48 fährt der Träger 26a bei der Aufwärtsbewegung des Kolbens 21a in Richtung des Pfeils 32a und wird auf diese Weise in Richtung der Pfeile 46 komprimiert.

Sobald nun der Kolben 21a die in Fig. 4 mit B bezeichnete Stellung erreicht, überfährt der Träger 26a' den Übergang 23a zwischen Aussparung 20 und Oberfläche 34. Wie in Fig. 5 dargestellt, kann sich der seitlich komprimierte Träger 26a'' demzufolge entspannen und weitet sich nach außen auf, wodurch gleichzeitig der Übergang 23a in der Oberfläche 34 überfahren wird.

Wie aus dem Ausschnitt 40a in Fig. 5 erkennbar, überlappt nun der Rand 47'' den Übergang 23a, so daß der Spalt 42a zur Kunststoffmasse 30a'' abgedeckt wird. Demzufolge kann keine Kunststoffmasse 30a'' in den Spalt 42a eindringen. Die Unterseite des Moduls 25a'' bzw. des Trägers 26a'' liegt somit bündig in der Oberfläche 34a und es entsteht eine vollkommen glatte Oberfläche der Smart Card.

In Fig. 5 ist links ferner dargestellt, daß der Kolben 21a'' in der eingezeichneten Endstellung mechanisch verriegelt werden kann. Hierzu sind sowohl im Kolben 21a'' als auch in der Werkzeughälfte 12a Bohrungen 50, 51 vorgesehen, die in der Stellung gemäß Fig. 5 miteinander fluchten. Mittels eines Bolzens 52, der beide Bohrungen 50, 51 durchsetzt, kann der Kolben 21a'' nun in axialer Richtung verriegelt werden. Dies hat zur Folge, daß auch bei einem sehr hohen Druck im Hohlraum 13a der Kolben 21a nicht zurückgeschoben werden kann.

Das in den Fig. 4 und 5 dargestellte Verfahren kann insoweit noch verfeinert werden, als der Kolben 21a' in der in Fig. mit A bezeichneten Stellung kurzzeitig angehalten werden kann, solange die flüssige Kunststoffschmelze 30a' in den Hohlraum 13a einströmt. Die eingezeichnete Position A ist dabei nur beispielhaft zu verstehen. Der Kolben 21a' kann auch etwas weiter vorgeschoben sein, so daß die Oberseite des Trägers 26a' mit der Oberfläche 34a fluchtet. Jedenfalls ist die Position A so gewählt, daß die Kunststoffschmelze 30a' ungehindert in den Hohlraum 13a einströmen kann.

In einer zweiten Stufe wird nun der Kolben 21a' in die Endstellung B vorgeschoben und damit das Modul 25a' in die Kunststoffschmelze 30a' eingedrückt, wie in Fig. 5 mit 25a'' und 30a'' eingezeichnet.

Durch das Eindrücken des Moduls 25a'' gemäß Fig. 5 kann zusätzlich der sonst zum Ausgleich der bei der Abkühlung auftretenden Schwindung erforderliche Nachdruck aufgebracht werden.

Bei dem in den Fig. 6 bis 8 dargestellten weiteren Ausführungsbeispiel der Erfindung besteht eine Abweichung insofern, als die Aussparung 20b in der Werkzeughälfte 12b nunmehr insgesamt kegelig, d.h. nach oben verjüngt, also z.B. pyramidenförmig oder konisch ausgebildet ist. Der Kolben 21b ist in dem in Fig. 6 unteren Abschnitt z.B. zylindrisch ausgebildet, während der vordere Abschnitt 56 kegelig gestaltet ist. Die Kegelform des Abschnitts 56 stimmt dabei mit der Kegelform der Aussparung 20b überein.

Der Träger 26b ist wieder aus einem elastischen Material ausgebildet. Sein Rand 47b steht geringfügig über die Stirnfläche 22b des Kolbens 21b vor.

Wie man leicht aus Fig. 6 erkennen kann, ist der Träger 26b im Querschnitt größer als eine Öffnung 60 der Aussparung 20b in die Oberfläche 34b. Wie mit Pfeilen 61 angedeutet, trifft der Träger 26b daher noch auf die kegelige Aussparung 20b auf, bevor der Übergang 23b erreicht wird. Sobald der elastische Träger 26b in Richtung der Pfeile 61 auf die kegelige Aussparung 20b auftrifft, ist der hintere Raum der Aussparung 20b zum Hohlraum 13b hin dicht verschlossen. Dies entspricht der bereits zu den Fig. 4 und 5 erläuterten ersten Stellung A, in der der Kolben 21b zunächst angehalten werden kann. Die Kunststoffschmelze 30b kann nun in den Hohlraum 13b eingespritzt werde. Sie wird dabei durch das Modul 25b nicht behindert, weil dies noch zumindest teilweise unterhalb der Oberfläche 34b liegt. Andererseits wird ein Eindringen der Kunststoffschmelze 30b in die hinteren Abschnitte der Aussparung 20b verhindert, weil die Aussparung 20b, wie erwähnt, nach vorne hin dicht verschlossen ist.

Wenn nun der Hohlraum 13b ganz oder größtenteils mit der Kunststoffschmelze 30b befüllt ist, kann gemäß Fig. 7 der Stempel 21b' nach oben verfahren werden, wobei hier der Zustand der maximalen Kompression (Pfeile 46b) erreicht ist, da hier der Rand 47b genau auf den engsten Querschnitt im Bereich des Überganges 23b komprimiert ist.

Sobald der Hohlraum 13b nun vollständig mit Kunststoffschmelze ausgefüllt ist, wie mit 30b'' in Fig. 8 dargestellt, wird der Kolben 21b'' in die Endstellung gemaß Fig. 8 verfahren. Der Rand 47b'' schnappt nun über den Übergang 23b bzw. die Öffnung 60 und verschließt den dort vorhandenen Spalt 42b. Dieser Spalt 42b ist aus konstruktiven Gründen unvermeidbar, weil im Bereich des Übergangs 23b der kegeligen Aussparung 20b in die ebene Oberfläche 34b eine gewisse Abrundung erforderlich ist.

Man erkennt aus Fig. 8 ferner, daß der kegelige Abschnitt 56' bündig an der kegeligen Aussparung 20b anliegt. Es kann also auf den Kolben 21b'' in der Stellung gemäß Fig. 8 eine axiale Schließkraft von unten nach oben ausgeübt werden. Diese axiale Schließkraft verhindert, daß der Druck der Kunststoffschmelze 30b'' den Kolben 21b'' wieder nach unten drückt.

## Patentansprüche

1. Verfahren zum Herstellen von Verbundkörpern aus einer Kunststoffmasse, in die ein Bauteil (25) zumindest teilweise eingebettet ist, bei welchem Verfahren eine flüssige Kunststoffschmelze (30) in einen Formhohlraum (13) eines Spritzgießwerkzeugs (10) eingespritzt wird und die Kunststoffschmelze (30) im Formhohlraum (13) ein Bauteil (25) wenigstens teilweise umschließt, wobei das Bauteil (25) dem Formhohlraum (13) durch eine mit einem Übergang (23) in eine Oberfläche (34) des Formhohlraums (13) mündende Aussparung (20) zugeführt wird, dadurch gekennzeichnet, daß der Übergang (23) überdeckt wird, wenn das Bauteil (25) beim Zuführen den Übergang (23) passiert.

2. Verfahren nach Anspruch 1, dadurch gekennzeichnet, daß das Bauteil (25) während des Zuführens zunächst in einer zur Oberfläche (34) parallelen Richtung komprimiert (46) und dann über den Übergang (23) hinweg wieder entspannt wird.

3. Verfahren nach Anspruch 1, dadurch gekennzeichnet, daß das Bauteil (25) einen elastischen Träger (26) umfaßt und daß der Träger (26) komprimiert (46) wird und sich dann selbsttätig entspannt.

4. Verfahren nach Anspruch 2 oder 3, dadurch gekennzeichnet, daß das Bauteil (25) beim Zuführen an einer Innenumfangsfläche der Aussparung (20) entlanggeführt und aufgrund der Formgebung der Innenumfangsfläche komprimiert und entspannt wird.

5. Verfahren nach Anspruch 4, dadurch gekennzeichnet, daß das Bauteil (25) in der Aussparung (20) komprimiert und beim Passieren des Überganges (23) entspannt wird.

6. Verfahren nach einem oder mehreren der Ansprüche 1 bis 5, dadurch gekennzeichnet, daß das Bauteil (25) an mindestens einer Position (A, B) in der Aussparung (20b) mechanisch verriegelt wird.

7. Verfahren nach einem oder mehreren der Ansprüche 1 bis 6, dadurch gekennzeichnet, daß das Bauteil (25) in der Aussparung (29) in zwei Stufen zugeführt wird, indem das Bauteil (25) in einer ersten axialen Position (A) angehalten und dann in eine zweite axiale Position (B) gebracht wird, wobei das Bauteil (25) in der ersten axialen Position (A) das Einströmen der Kunststoffschmelze (30') in den Formhohlraum (13) nicht behindert und die Aussparung (20) dicht verschließt, während es in der zweiten Position (B) seine Endstellung erreicht und in die den Formhohlraum (13) ausfüllende Kunststoffschmelze (30'') eingedrückt wird.

8. Vorrichtung zum Herstellen von Verbundkörpern aus einer Kunststoffmasse, in die ein Bauteil (25) zumindest teilweise eingebettet ist, mit einen Spritzgießwerkzeug (10) und einem darin vorgesehenen Formhohlraum (13), in dessen Oberfläche (34) seitlich eine Aussparung (20) mit einem Übergang (23) mündet, wobei eine flüssige Kunststoffschmelze (30) in den Formhohlraum (13) eingespritzt wird und die Kunststoffschmelze (30) im Formhohlraum (13) ein Bauteil (25) wenigstens teilweise umschließt, und wobei ferner das Bauteil (25) dem Formhohlraum (13) durch die Aussparung (20) zugeführt wird, dadurch gekennzeichnet, daß das Bauteil (25) den Übergang (23) überdeckt, wenn es beim Zuführen den Übergang (23) überfährt.

9. Vorrichtung nach Anspruch 8, dadurch gekennzeichnet, daß das Bauteil (25) einen elastischen Träger (26a) umfaßt, der während des Zuführens in der Aussparung (20) in radialer Richtung komprimiert (46) und beim Überfahren des Überganges (23) entspannt ist.

10. Vorrichtung nach Anspruch 9, dadurch gekennzeichnet, daß der Träger (26a) aus einem elastischen Material besteht.

11. Vorrichtung nach Anspruch 9, dadurch gekennzeichnet, daß der Träger (26a) am Rand nach Art einer Dichtlippe ausgebildet ist.

12. Vorrichtung nach Anspruch 9, dadurch gekennzeichnet, daß der Träger (26a) auf seiner vom Hohlraum (13) abgewandten Seite über einen wesentlichen Teil seiner Dicke mit einem Mäander versehen ist.

13. Vorrichtung nach einem oder mehreren der Ansprüche 9 bis 12, dadurch gekennzeichnet, daß die Aussparung (20) mindestens teilweise kegelig ausgebildet ist.

14. Vorrichtung nach Anspruch 13, dadurch gekennzeichnet, daß die Aussparung (20a) im Bereich des Überganges (23a) rechteckig oder zylindrisch ausgebildet ist und im Abstand vom Übergang (23a) einen pyramidenförmigen bzw. konischen Abschnitt (48) aufweist.

15. Vorrichtung nach Anspruch 13, dadurch gekennzeichnet, daß die Aussparung (20b) insgesamt kegelig ausgebildet ist.

16. Vorrichtung nach einem oder mehreren der Ansprüche 9 bis 15, dadurch gekennzeichnet, daß das Bauteil (25b) mittels eines in der Aussparung (20b) laufenden Kolbens (21b) zugeführt wird, und daß der Kolben (21b) mindestens abschnittsweise komplementär-kegelig zur Aussparung (20b) ausgebildet ist.

17. Vorrichtung nach einem oder mehreren der Ansprüche 8 bis 16, dadurch gekennzeichnet, daß Mittel (50 - 52) zum mechanischen Verriegeln des Bauelementes (25a) an mindestens einer Position (A, B) in der Aussparung (20b) vorgesehen sind.
